Europäisches Patentamt

European Patent Office

Office européen des brevets

(19)

(11) Veröffentlichungsnummer: **0 291 550**
**B1**

(12) **EUROPÄISCHE PATENTSCHRIFT**

(45) Veröffentlichungstag der Patentschrift: **23.01.91**

(51) Int. Cl.⁵: **F 16 D 41/07**

(21) Anmeldenummer: **87107317.7**

(22) Anmeldetag: **20.05.87**

(54) **Klemmkörper-Freilauf mit Doppelkäfig.**

(43) Veröffentlichungstag der Anmeldung:
**23.11.88 Patentblatt 88/47**

(45) Bekanntmachung des Hinweises auf die
Patenterteilung: **23.01.91 Patentblatt 91/04**

(84) Benannte Vertragsstaaten:
**DE FR GB IT NL SE**

(56) Entgegenhaltungen:
**DE-A-1 475 433**
**DE-A-1 675 151**
**US-A-2 892 523**
**US-A-3 049 205**
**US-A-3 388 779**
**US-E- 29 985**

(73) Patentinhaber: **Borg-Warner Automotive GmbH**
**Kurpfalzring**
**D-6900 Heidelberg 1 (DE)**

(72) Erfinder: **Leitz, Hermann**
**Mühltalstrasse 122a**
**D-6900 Heidelberg (DE)**
Erfinder: **Krayer, Erich**
**Mannheimer Strasse 120**
**D-6836 Oftersheim (DE)**
Erfinder: **Kohler, Rudolf**
**Kopernikusstrasse 11**
**D-6902 Sandhausen (DE)**

(74) Vertreter: **Meyer-Roedern, Giso, Dr. et al**
**Bergheimer Strasse 10-12**
**D-6900 Heidelberg 1 (DE)**

Courier Press, Leamington Spa, England.

## Beschreibung

Die Erfindung betrifft einen Klemmkörper-Freilauf mit Doppelkäfig, zu dem ein Außenkäfigring und ein Innenkäfigring gehören, die relativ zueinander in Umfangsrichtung verstellbar sind und im wesentlichen knochenförmige, Klemmflächen aufweisende Klemmkörper zur gleichmäßigen drehmomentaufnehmenden Belastung synchron führen.

Klemmkörper-Freiläufe dieser Art, wie sie beispielsweise durch die US—A—30 49 205 bekannt sind, finden eine vielseitige Verwendung vor allem in der Kraftfahrzeug-Industrie. Die Doppelkäfige sind in aller Regel aus Metall ausgebildet. Für Sonderausführungen sind bereits auch Käfige verwendet worden, die aus Kunststoff hergestellt wurden. Die aus Metall hergestellten Käfige verfügen über Eigenschaften, die von den Kunststoffkäfigen nicht erfüllt werden, und umgekehrt sind die Kunststoffkäfige in bestimmten Bereichen den Metallkäfigen überlegen.

Bei Kraftfahrzeug-Getrieben können Problemstellungen auftreten, bei denen der Einsatz eines Doppelkäfig-Freilaufs mit Metallkäfigringen oder der Einsatz eines Doppelkäfig-Freilaufs mit Kunststoffkäfigringen nicht zu einer optimalen Lösung des Problems führt.

Aus der US—A—33 88 779 ist ein Rollenfreilauf bekannt, bei dem eine Anzahl zylindrischer Klemmrollen, die keine Klemmflächen aufweisen, an einem einfachen Rollenkäfig angebracht sind, mit dem eine Verstellung der Rollen im Umfangsrichtung über Rampenflächen an dem Freilaufinnenring erfolgt. Der Rollenkäfig besteht aus Metall. Zwei Rollen sind durch einen Temperaturkompensationsring aus Kunststoff beaufschlagt, der den Rollenkäfigring in konzentrischer Anordnung außen umgibt und die Rollen mit einer temperaturabhängigen Vorspannung beaufschlagt, die die Temperaturabhängigkeit der Viskosität einer Viskoseflüssigkeit kompensiert.

Aufgabe der Erfindung ist es, einen Klemmkörper-Freilauf der eingangs genannten Art zu schaffen, der bei hoher Festigkeit und entsprechend hoher Belastbarkeit eine werkzeug- und maschinenmäßige Verbilligung, eine Senkung der Materialkosten und eine Gewichtsersparnis mit sich bringt und eine unaufwendige Ausbildung bestimmter Funktionselemente ermöglicht.

Die Lösung dieser Aufgabe ist bei einem Klemmkörper-Freilauf mit Doppelkäfig der genannten Art darin zu sehen, daß der Innenkäfigring aus Metall und der Außenkäfigring aus Kunststoff besteht, und daß an den Außenkäfigring in Kunststofftechnik wenigstens ein Funktionselement zur axialen Fixierung und/oder reibschlüssigen Verspannung des Außenkäfigrings angeformt ist.

In weiterer Ausgestaltung der Erfindung kann der äußere Käfigring an seiner radial nach außen weisenden Fläche mit Stegen zur reibschlüssigen Verspannung mit einem Außenring des Freilaufs versehen sein. Durch diese Maßnahme können die für die Halterung des Freilaufs üblichen Spannringe wegfallen.

Weiter ist es möglich, auf dem Außenkäfigring auf seinem Umfang verteilt radial vorstehende Nocken anzubringen, die in eine am Außenring des Freilaufs angebrachte Ringnut eingreifen. Diese Nocken sind vorzugsweise an beweglichen Zungen des Außenkäfigrings an mehreren Stellen angebracht. Die Zungen lassen einen geringfügigen Federweg der Nocken zu, so daß dieselben beim Einstecken in den Außenring in die dort befindliche Ringnut einschnappen.

Der Außenkäfigring kann darüber hinaus mit einem umlaufenden Bund oder mit einer gegenüber der ersten Nockenreihe erhöhten zweiten Nockenreihe versehen sein, um dadurch eine Falschmontage zwischen Käfig und Außenring zu vermeiden. Der umlaufende Bund bzw. die zweite Nockenreihe verhindert das Falscheinsetzen des Außenkäfigrings in den Außenring des Freilaufs.

Darüber hinaus kann der Außenkäfigring an wenigstens einer Seite mit einer Schnappverbindung versehen sein, die mit zugehörigen weiteren Schnappverbindungsteilen einer anliegenden Seitenscheibe, insbesondere Öldämmscheibe, korrespondieren.

Eine solche Schnappverbindung besteht bevorzugt aus an dem Außenkäfigring angeformten Zungen mit Hakenansätzen und in den Seitenscheiben eingefügten Schlitzen mit Absätzen für die Hakenansätze. Die Zungen werden in die Schlitze eingefügt und die Hakenansätze hintergreifen die Absätze.

In vielen Anwendungsfällen ist es günstig, wenn die Seitenscheiben, insbesondere Öldämmscheiben, eine verstärkte Ausführung haben und als Stützringe ausgebildet sind. Diese Stützringe können einen U-förmigen Querschnitt haben und können zur weiteren Verstärkung mit in ihrer axialen Stirnwand eingeschnittenen und eingeformten Radialstützen versehen sein, an deren radialen Schnittflächen die Schenkel des U-Profils anliegen. Bei geringen Axialkräften und geringen Temperaturen können die Öldämmscheiben auch als Gleitlager zur Aufnahme der Axialkräfte dienen.

Gemäß einer anderen Lösung ist es vorteilhaft, wenn der Außenkäfigring an wenigstens einer Seite mit nabenförmigen Vorsprüngen versehen ist, die jeweils einen leichten Ringwulst haben. Dann erfassen die Seitenscheiben mit ihren äußeren Schenkel die Vorsprünge und mit ihren Abwinklungen oder Zungen die Ringwulst.

Anhand mehrerer Ausführungsbeispielen wird die Erfindung nachstehend näher erläutert.

Es zeigen

Fig. 1 einen Klemmkörper-Freilauf mit Doppelkäfig in der Draufsicht;

Fig. 2 den Käfig nach Fig. 1 ohne Klemmkörper in der Seitenansicht;

Fig. 3 einen Schnitt durch den Freilauf nach C—D von Fig. 1;

Fig. 4 einen Schnitt durch den Freilauf nach E—F von Fig. 1;

Fig. 5 einen Schnitt durch eine andere Variante eines Klemmkörpers-Freilaufs;

Fig. 6 einen Außenkäfigring in der Draufsicht;

Fig. 7 ein Segment des Außenkäfigrings nach Fig. 6 in der Vergrößerung;

Fig. 8 ein weiteres Segment des Außenkäfigrings nach Fig. 6 in der Vergrößerung;

Fig. 9 eine Seitenansicht des Außenkäfigrings nach Fig. 6;

Fig. 10 einen Schnitt durch den Außenkäfigring nach Fig. 9 in vergrößerter Darstellung;

Fig. 11 eine weitere Variante des Klemmkörper-Freilaufs im Schnitt; und

Fig. 12 und Fig. 13 Abschnitte des Klemmkörper-Freilaufs nach Fig. 11 in der Seitenansicht.

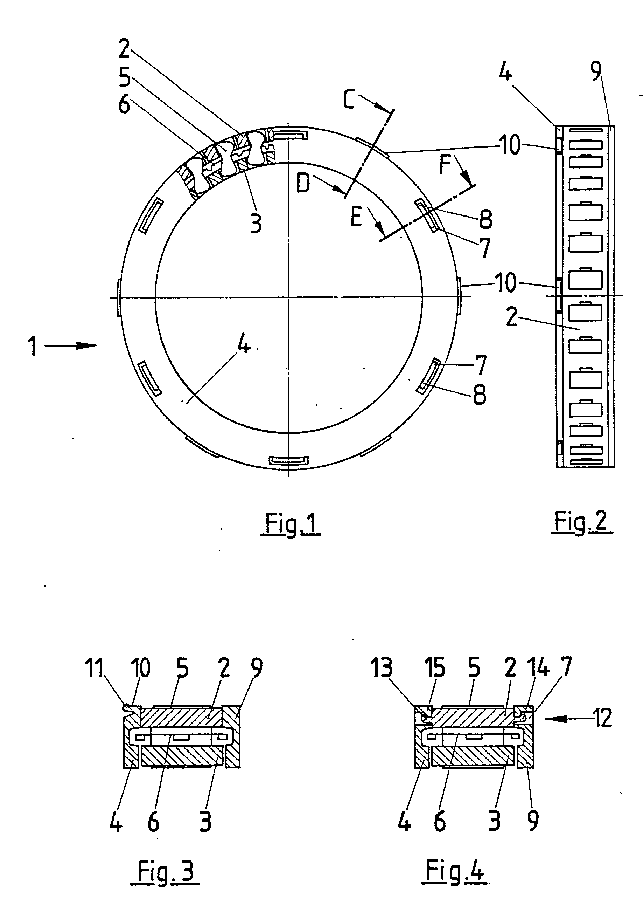

Der in der Fig. 1 gezeigte Klemmkörper-Freilauf 1 mit Doppelkäfig aus dem Außenkäfigring 2 und dem Innenkäfigring 3 ist in der Draufsicht dargestellt, wobei teilweise die obere Seitenscheibe 4 weggebrochen ist, um die Lage der Käfigringe 2 und 3 sowie der Klemmkörper 5 zu zeigen. Die Klemmkörper 5 sind durch eine gemeinsame Feder 6 in Klemmrichtung angefedert. Der Außenkäfigring 2 ist aus Kunststoff, der Innenkäfigring 3 aus Metall.

Der Freilauf 1 ist, wie insbesondere der Fig. 2 zu entnehmen ist, mit den Seitenscheiben 4 und 9 versehen, die eine verstärkte Ausführung haben. In den Seitenscheiben 4 und 9 sind Schlitze 7 angebracht, in welche Zungen 8 des Außenkäfigrings 2 eingreifen, um auf diese Weise eine Schnappverbindung zwischen dem Außenkäfigring 2 und den Seitenscheiben 4 und 9 herzustellen.

Die Fig. 3 stellt einen Schnitt nach der Linie C—D der Fig. 1 dar. Hier ist deutlich die verstärkte Ausführung der Seitenscheiben 4 und 9 sichtbar. Die Seitenscheibe 4 ist an mehreren über ihren Umfang verteilten Stellen mit Nocken 10 versehen, die zur Befestigung der Seitenscheibe 4 und damit des gesamten Käfigs in einem nicht näher dargestellten Außenring des Freilaufs 1 dienen. Die Nocken 10 haben die Form von federnd eindrückbaren Lappen, an deren äußerem Ende ein Nockenvorsprung 11 vorhanden ist.

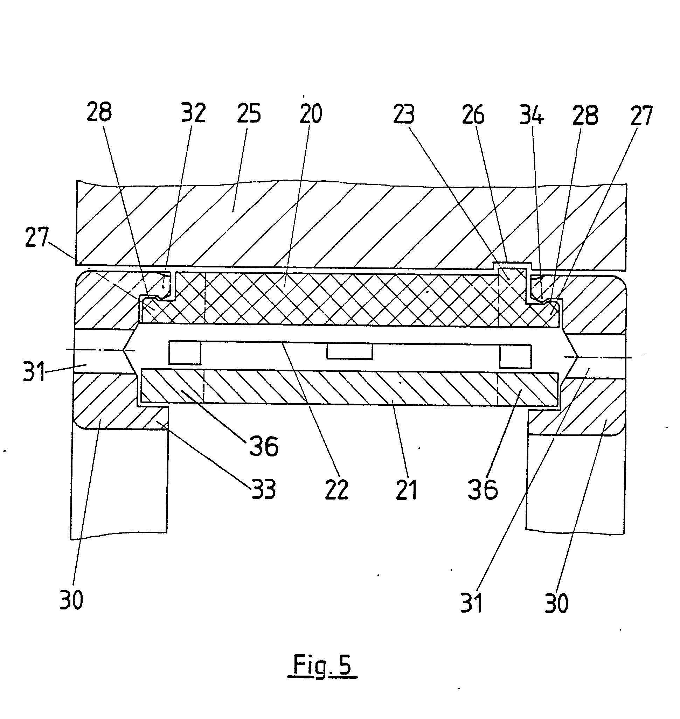

Die Fig. 4 zeigt einen Schnitt nach der Linie E—F der Fig. 1, in dem die Schnappverbindung zwischen dem Außenkäfigring 2 und den Seitenscheiben 4 und 9 sichtbar ist. Die Schnappverbindung 12 besteht aus am Außenkäfigring 2 angeformten Zungen 13 mit Hakenansätzen 14. Die Zungen 13 greifen in die Schlitze 7 der Seitenscheiben 4 und 9 ein und kommen hinter den Absätzen 15 mit ihren Hakenansätzen 14 zum Anliegen. Auf diese Weise sind die Seitenscheiben 4 und 9 mit dem Außenkäfigring 2 verbunden. Der Innenkäfigring 3 ist von den Seitenscheiben 4 und 9 eingefaßt. Insgesamt ergibt sich auf diese Weise eine in sich geschlossene Einheit aus Außenkäfigring 2, Innenkäfigring 3, den Seitenscheiben 4 und 9, den Klemmkörpern 5 und der Feder 6.

Bei der vorliegenden Ausführung eines Doppelkäfigs kann der Käfig zwischen zwei Freilaufringe eingefügt in radialer Richtung Tragfunktionen übernehmen, und zwar durch die Seitenscheiben 4 und 9. Die Wandstärke der Seitenscheiben 4 und 9 richtet sich nach der Größe der aufzunehmenden Kräfte.

In der Fig. 5 ist der obere Teil eines Doppelkäfigs gezeigt, bei dem in gleicher Weise wie bei der voran geschilderten Ausführungsform der Außenkäfigring 20 aus Kunststoff gefertigt ist. Der Innenkäfigring 21 ist aus Metall. Die Feder 22 federt die nicht näher gezeigten Klemmkörper an. Der Außenkäfigring 20 ist auf seiner einen Seite mit mehreren radial vorstehenden Nocken 23 versehen, die in eine am Außenring 25 des Freilaufs angebrachte Ringnut 26 eingreifen. Auf diese Weise ist der gesamte Käfig gegen Axialverschiebungen festgelegt.

Der Außenkäfigring 20 ist an seinen Seiten außerdem mit nabenförmigen Vorsprüngen 27 versehen, die jeweils einen leichten Ringwulst 28 haben.

Die bei dem Ausführungsbeispiel verwendeten Seitenscheiben 30 sind gleichzeitig als Öldämmscheiben ausgebildet, indem auf ihrem Umfang verteilt mehrere Bohrungen 31 angebracht sind, durch die das Öl abfließen kann. Die verstärkte Ausführungsform der Seitenscheiben 30 ist erkennbar. Seitenscheiben dieser Art können auch als Stützringe bezeichnet werden.

Im Querschnitt gesehen haben die Seitenscheiben 30 eine U-förmige Ausbildung. Mit den Schenkeln 32 und 33 umfassen sie die Vorsprünge 27 des Außenkäfigrings 20 und die verlängerten Enden 36 des Innenkäfigrings 21. über den Umfang der Seitenscheiben 30 verteilt sind bei den Schenkeln 32 abschnittsweise Abwinklungen 34 vorgesehen, die hinter die Wulst 28 einschnappen, wenn die Seitenscheibe 30 auf den Käfig aufgedrückt wird.

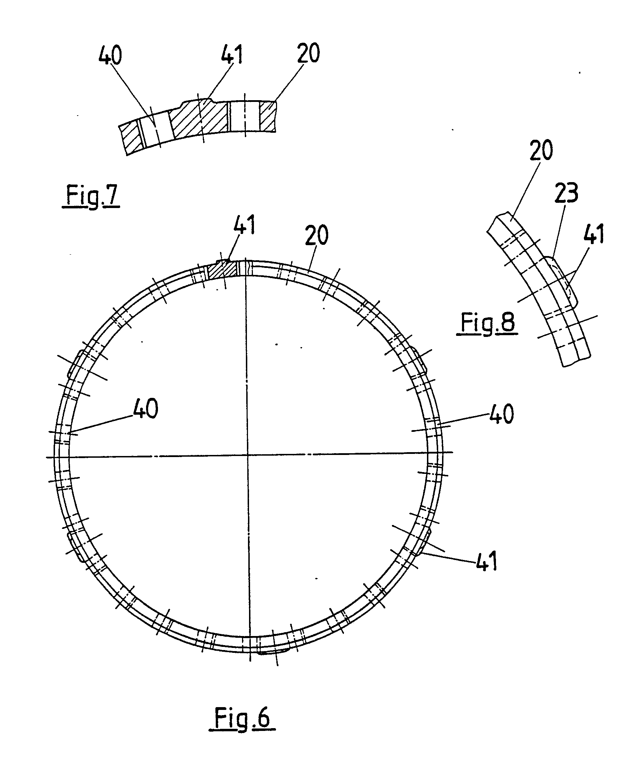

Die Fig. 6 zeigt einen Außenkäfigring aus Kunststoff, wie er in der Fig. 5 zur Anwendung kommen kann. Auf dem Umfang des Außenkäfigrings 20 sind eine Vielzahl von Festern 40 für den Einsatz der Klemmkörper vorgesehen. An mehreren Stellen ist der Außenkäfigring 20 mit Stegen 41 versehen, mit denen er am Außenring 25 des Freilaufs anliegt, um auf diese Weise eine reibschlüssige Verspannung zum Außenring 25 herzustellen.

In der Fig. 7 ist in einem Ausschnitt des Käfigs 40 der Steg 41 in der Vergrößerung gezeigt.

Die Stege 41 sind im vorliegenden Ausführungsbeispiel an sechs Stellen des Außenkäfigrings 20 angeordnet. In dem gleichen Bereich sind auch, wie der Fig. 8 zu entnehmen ist, die radial vorstehenen Nocken 23 angebracht, die in die Ringnut 26 des Außenrings 25 des Freilaufs eingreifen.

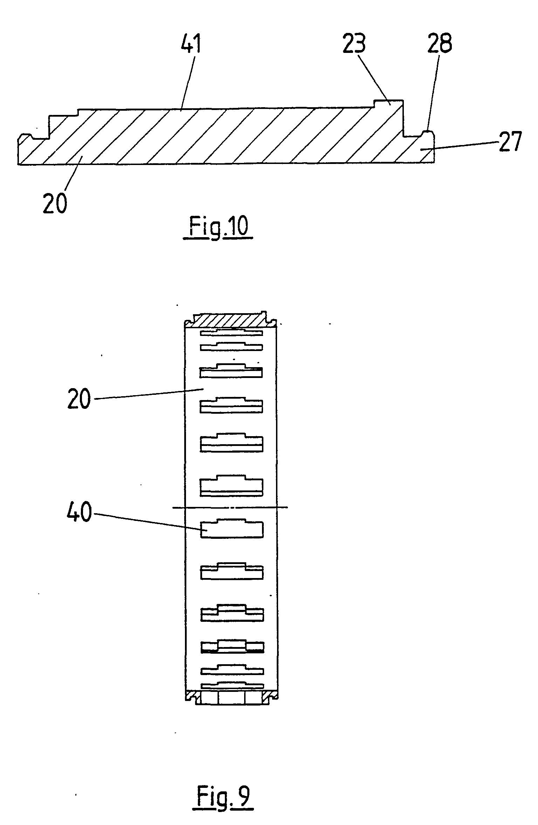

Die Fig. 9 zeigt den Außenkäfigring 20 nach Fig. 6 im Querschnitt. Die Anordnung der Käfigfenster 40 und ihre Ausgestaltung sind sichtbar.

In der Fig. 10 ist vergrößert ein Schnitt durch den Außenkäfigring 20 gezeigt, wobei dieser Schnitt durch den Steg 41 und den Nocken 23 führt.

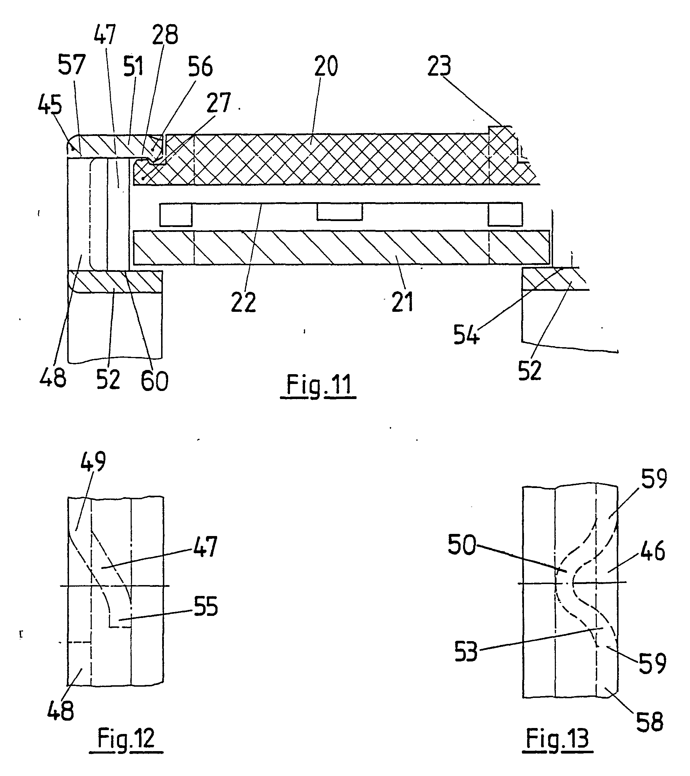

In der Fig. 11 ist eine Ausführungsform gezeigt, bei der der Doppelkäfig mit seinem Außenkäfigring 20, seinem Innenkäfigring 21, sowie den nicht näher gezeigten Klemmkörpern und der Feder 22 in ihrem prinzipiellen Aufbau der Ausführungsform nach den Fig. 5 bis 9 entsprechen. Andersartig ist hier jedoch die Ausbildung der Seitenscheiben 45 und 46. Auch diese Seitenscheiben 45 und 46 sind in ihrem Querschnitt U-förmig ausgebildet und von verstärkter Ausführungsform. Auf ihrem Umfang verteilt sind sie jedoch mit den Radialstützen 47 bzw. 50 versehen, die zur Versteifung der Seitenscheiben 45 und 46 beitragen. Die Radialstützen 47 und 50 ermöglichen die Verwendung von Seitenscheiben, die einen erheblichen geringeren Materialaufwand haben und auch auf einfachere Weise herstellbar sind, als die Seitenscheiben nach der Fig. 5. Dadurch ergeben sich auch die gewünschten Durchführungen für das Öl.

Die Radialstützen 47 sind aus der Stirnwand 48 der Seitenscheibe 45 herausgedrückt, indem die Stirnwand 48 an drei Stellen im Stanzverfahren durchschnitten wird. Lediglich an der Seite 49 verbleiben die Radialstützen 47 mit der Stirnwand 48 verbunden. Bei den Radialstützen 50 handelt es sich um eingedrückte Sicken, die durch Durchschneiden an nur zweier Stellen der Stirnwand 58 der Seitenscheibe 46 im Stanzverfahren hergestellt sind. Die Enden 59 der Radialstützen 50 verbleiben an der Stirnwand 58.

Die Radialstützen 47 und 50 nehmen die ganze Breite der Stirnwände 48 bzw. 58 zwischen den Schenkeln 51 und 52 der U-förmigen Seitenscheiben 45 und 46 ein. Die Schenkel 51 und 52 liegen mit ihren Innenflächen 60 und 57 an den äußeren bzw. inneren Schnittflächen 53 und 54 der Radialstützen 47 und 50 an. Die Radialstützen 47 können, wie in der Fig. 12 sichtbar, an ihren freien Enden eine Abwinklung 55 haben.

Die äußeren Schenkel 51 der Seitenscheiben 45 und 46 können in gleicher Weise, wie bei der Ausführungsform der Fig. 5, mit auf dem Umfang verteilten Zungen 56 für die Verrastung an der Ringwulst 28 der Vorsprünge 27 versehen sein.

## Patentansprüche

1. Klemmkörper-Freilauf mit Doppelkäfig, zu dem ein Außenkäfigring (2) und ein Innenkäfigring (3) gehören, die relativ zueinander in Umfangsrichtung verstellbar sind und im wesentlichen knochenförmige, Klemmflächen aufweisende Klemmkörper (5) zur gleichmäßigen drehmomentaufnehmenden Belastung synchron führen, dadurch gekennzeichnet, daß der Innenkäfigring (3) aus Metall und der Außenkäfigring (2) aus Kunststoff besteht, und daß an den Außenkäfigring (2) in Kunststofftechnik wenigstens ein Funktionselement (23, 41) zur axialen Fixierung und/oder reibschlüssigen Verspannung des Außenkäfigrings (2) angeformt ist.

2. Klemmkörper-Freilauf nach Anspruch 1, dadurch gekennzeichnet, daß der Außenkäfigring (2) an seiner radial nach außen weisenden Fläche mit Stegen (41) zur reibschlüssigen Verspannung mit einem Außenring (25) des Freilaufs versehen ist.

3. Klemmkörper-Freilauf nach Anspruch 1 oder 2, dadurch gekennzeichnet, daß der Außenkäfigring (2) auf seinem Umfang verteilt radial vorstehende Nocken (10, 23) hat, die in eine am Außenring (25) des Freilaufs angebrachte Ringnut (26) eingreifen.

4. Klemmkörper-Freilauf nach einem der Ansprüche 1 bis 3, dadurch gekennzeichnet, daß der Außenkäfigring (2, 20) einen umlaufenden Bund (23) oder gegenüber einer ersten Nockenreihe eine erhöhte zweite Nockenreihe aufweist.

5. Klemmkörper-Freilauf nach einem der Ansprüche 1 bis 4, dadurch gekennzeichnet, daß der Außenkäfigring (2) an wenigstens einer Seite mit Schnappverbindungsteilen versehen ist, die mit zugehörigen weiteren Schnappverbindungsteilen einer anliegenden Seitenscheibe insbesondere Öldämmscheibe, korrespondieren.

6. Klemmkörper-Freilauf nach einem der Ansprüche 1 bis 5, dadurch gekennzeichnet, daß die Schnappverbindungsteile (12) aus an dem Außenkäfigring (2) angeformten Zungen (13) mit Hakenansätzen (14) und in den Seitenscheiben (4, 9) eingefügten Schlitzen (7) mit Absätzen (15) für die Hakenansätze (14) bestehen.

7. Klemmkörper-Freilauf nach einem der Ansprüche 1 bis 6, dadurch gekennzeichnet, daß die Seitenscheiben (4, 9) eine verstärkte Ausführung haben und als Stützring ausgebildet sind.

8. Klemmkörper-Freilauf nach einem der Ansprüche 1 bis 7, dadurch gekennzeichnet, daß die Stützringe einen U-förmigen Querschnitt haben und daß sie in ihrer axialen Stirnwand (48) mit eingeschnittenen und eingeformten Radialstützen (47) versehen sind, an deren radialen Schnittflächen die Schenkel des U-Profils anliegen.

9. Klemmkörper-Freilauf nach einem der Ansprüche 1 bis 8, dadurch gekennzeichnet, daß der Außenkäfigring (2) an wenigstens einer Stelle mit nabenförmigen Vorsprüngen (27) versehen ist, die jeweils einen leichten Ringwulst (28) haben.

10. Klemmkörper-Freilauf nach einem der Ansprüche 1 bis 9, dadurch gekennzeichnet, daß die Seitenscheiben (30, 45, 46) mit ihren äußeren Schenkeln (32, 51) die Vorsprünge (27) und mit ihren Abwinklungen (34) oder Zungen (56) die Ringwulst (28) erfassen.

## Revendications

1. Roue libre à corps d'arrêt avec double cage, comportant une bague extérieure de cage (2) et une bague intérieure de cage (3) pouvant avoir un mouvement relatif l'une par rapport à l'autre dans le sens de la périphérie et guidant, de façon synchrone, des corps d'arrêt (5), essentiellement en forme d'osselets et présentant des surfaces d'arrêt, pour reprendre la charge à couple constant, caractérisée en ce que la bague intérieure de cage (3) est réalisée en métal et la bague extérieure de cage (2) est réalisée en matière plastique, et en ce que, sur la bague extérieure de cage (2), dans la technique de la matière plastique, au moins un organe de fonctionnement présente une forme adaptée pour immobiliser axialement et/ou pour mettre en serrage par friction la bague extérieure de cage (2).

2. Roue libre à corps d'arrêt suivant la revendication 1, caractérisée en ce que la bague extérieure de cage (2), sur sa face tournée radialement vers l'extérieur, est munie d'entretoises (41) pour mettre en serrage par friction une bague extérieure (25) de la roue libre.

3. Roue libre à corps d'arrêt suivant la revendication 1 ou 2, caractérisée en ce que la bague extérieure de cage (2) présente, réparties sur sa périphérie, des saillies (10, 23) dépassant radialement, qui engrènent dans une rainure annulaire (26) réalisée dans la bague extérieure (25) de la roue libre.

4. Roue libre à corps d'arrêt suivant l'une des revendications 1 à 3, caractérisée en ce que la bague extérieure de cage (2, 20) présente un bossage (23) ou une deuxième rangée de saillies relevée par rapport à la première rangée de saillies.

5. Roue libre à corps d'arrêt suivant l'une des revendications 1 à 4, caractérisée en ce que la bague extérieure de cage (2) est munie, sur au moins une de ses faces, de pièces d'assemblage à enclenchement qui correspondent à d'autres pièces d'assemblage à enclenchement, adaptées, d'un disque latéral placé contre elles, en particulier d'un disque d'arrêt d'huile.

6. Roue libre à corps d'arrêt suivant l'une des revendications 1 à 5, caractérisée en ce que les pièces d'assemblage à enclenchement (12) sont constituées par des languettes (13) formées sur la bague extérieure de cage (2) et comportant des crochets en saillie (14) et par des rainures (7) insérées dans les disques latéraux (4, 9) et comportant des épaulements (15) pour les crochets en saillie (14).

7. Roue libre à corps d'arrêt suivant l'une des revendications 1 à 6, caractérisée en ce que les disques latéraux (4, 9) présentent une exécution renforcée et sont réalisés sous la forme de bagues d'appui.

8. Roue libre à corps d'arrêt suivant l'une des revendications 1 à 7, caractérisée en ce que les bagues d'appui ont une section en forme de U et en ce qu'elles sont munies, sur leur paroi frontale axiale (48), de renforts radiaux (47) découpés et mis en forme par pressage, sur les surfaces radiales de découpe desquels les montants du profilé en U viennent au contact.

9. Roue libre à corps d'arrêt suivant l'une des revendications 1 à 8, caractérisée en ce que la bague extérieure de cage (2), au moins à un endroit, est munie d'avancées (27) formant moyeu, qui présentent chacune un léger renflement torique (28).

10. Roue libre à corps d'arrêt suivant l'une des revendications 1 à 9, caractérisée en ce que les bagues latérales (30, 45, 46) viennent saisir, avec leur montants extérieurs (32, 51), les avancées (27) et, avec leur replis (34) ou leur languettes (56), le renflement torique (28).

**Claims**

1. Sprag clutch with a double cage, to which an outer cage ring (2) and an inner cage ring (3) belong, which are adjustable relative to each other in the peripheral direction and guide substantially bone-shaped sprags (5), comprising clamping surfaces, synchronously for the uniform, torque-receiving load, characterised in that the inner cage ring (3) consists of metal and the outer cage ring (2) consists of plastic and that formed integrally on the outer cage ring (2) by the plastic technique is at least one functional member for the axial fixing and/or frictional locking of the outer cage ring (2).

2. Sprag clutch according to Claim 1, characterised in that the outer cage ring (2) is provided on its radially outwardly directed surface with cross-pieces (41) for frictional locking to an outer ring (25) of the clutch.

3. Sprag clutch according to Claim 1 or 2, characterised in that the outer cage ring (2) has radially protruding cams (10, 23) distributed on its periphery, which cams engage in an annular groove (26) located on the outer ring (25) of the clutch.

4. Sprag clutch according to one of Claims 1 to 3, characterised in that the outer cage ring (2, 20) has a revolving collar (23) or a second row of cams which are higher than the first row of cams.

5. Sprag clutch according to one of Claims 1 to 4, characterised in that the outer cage ring (2) is provided on at least one side with clip connection parts, which correspond to associated, further clip connection parts of an adjacent lateral disc, in particular oil dam disc.

6. Sprag clutch according to one of Claims 1 to 5, characterised in that the clip connection parts (12) consist of tongues (13) with hook attachments (14) integrally formed on the outer cage ring (2) and of slots (7) with heels (15) for the hook attachments (14), which slots are inserted in the lateral discs (4, 9).

7. Sprag clutch according to one of Claims 1 to 6, characterised in that the lateral discs (4, 9) have a reinforced construction and are constructed as a support ring.

8. Sprag clutch according to one of Claims 1 to 7, characterised in that the support rings have a U-shaped cross-section and that they are provided on their axial end wall (48) with cut-in and formed radial supports (47), against the radial cut surfaces of which the arms of the U-profile bear.

9. Sprag clutch according to one of Claims 1 to 8, characterised in that the outer cage ring (2) is provided at at least one point with hub-shaped projections (27), which respectively have a slight torus (28).

10. Sprag clutch according to one of Claims 1 to 9, characterised in that the lateral discs (30, 45, 46) surround the projections (27) with their outer arms (32, 51) and the torus (28) with their bends (34) or tongues (56).

Fig.1

Fig.2

Fig.3

Fig.4

Fig. 5

40    41    20

Fig.7

41    20

20

23

41

40    40

Fig.8

41

Fig.6

Fig.10

Fig.9

4

Fig.11

Fig.12

Fig.13